# DEMANDE DE BREVET EUROPEEN

(11) **EP 3 599 526 A1**
(43) Date de publication de la demande: **29.01.2020**
(21) Numéro de dépôt: 19187103.7
(22) Date de dépôt: 18.07.2019
(51) Int. Cl.: G05B 19/418, B23P 21/00, B65G 47/00

(54) **SYSTÈME ET PROCÉDÉ AUTOMATISÉS DE TRANSFERT DE PIÈCES**

(30) Priorité: 23.07.2018 FR 1856806
(71) Demandeur: SMRC Automotive Holdings Netherlands B.V., 1077 ZX Amsterdam (NL)
(72) Inventeur: VANDROMME, Sandrine, 62138 Auchy-Les-Mines (FR); CHOQUET, Alain, 59260 Hellemmes-Lille (FR)
(74) Mandataire: Cabinet Nuss

(57) **Abrégé**

La présente invention a pour objet un système (1) de transfert de pièces (2) comprenant au moins une unité (3) de transport autonome et des stations (4, 5) de chargement et de déchargement d'unités de transport autonomes (3) et d'alimentation d'au moins un poste de travail ou de prélèvement (6).

Système (1) caractérisé en ce que la ou chaque unité de transport autonome (3) consiste en un véhicule à guidage automatique, en ce qu'il comprend des modules (7) de stockage temporaire de pièces (2) dans lesquels ces dernières sont disposées à plusieurs, durant leur transfert entre les deux types de stations (4 et 5), en ce que chaque module (7) constitue une boîte de transport pouvant être embarqué seul ou à plusieurs sur une unité de transport autonome (3), et en ce que ledit système (1) comprend, en outre, au niveau de la station (5) de déchargement et d'alimentation, des moyens d'acheminement final et individuel, vers le poste (6) concerné, de chacun des modules (7) chargés en pièces (2) et livrés par les unités de transport autonomes (3).

## Description

La présente invention concerne le domaine de la manipulation, du transport et du transfert de pièces, telles que des parties constitutives de véhicules automobiles, sur un site industriel de production, de transformation, d'assemblage, de traitement, de stockage, ... et a pour objet un système et un procédé de transfert de pièces dans le contexte précité.

Le contexte privilégié d'application de la présente invention est celui des lignes de production, d'assemblage ou analogue et plus particulièrement des flux de pièces entre machines, postes ou emplacements fonctionnels analogues d'un site industriel, de production, d'entreposage ou analogue.

Le type de pièces plus particulièrement visé dans la présente est celui des pièces d'habillage, de garniture ou de décoration avec au moins une face apparente et plus généralement les pièces qui sont allongées, encombrantes, de grande dimension surfacique et ne pouvant être empilées ou posées directement les unes sur les autres, mais devant être maintenues individuellement.

Pour des raisons d'efficacité, d'optimisation des temps de cycles, de productivité et d'ergonomie, mais également pour réduire les risques de traumatisme et de maladies professionnelles chez les opérateurs, les pièces en cours de traitement, de production ou d'assemblage, ainsi que les composants et parties devant être acheminé(e)s à des postes de travail, doivent suivre un flux dynamique avec minimisation de leurs opérations de manutention et de manipulation.

En outre, une optimisation des postes et stations de travail est constamment souhaitée, avec notamment un acheminement de la pièce, du composant ou de la partie à prélever, et provenant d'un flux, au plus près de l'opérateur, humain ou robotisé, pour limiter au maximum la complexité, l'ampleur et le nombre de mouvements et de déplacements à effectuer pour saisir et manipuler ce(tte) pièce, partie ou composant.

On peut ainsi définir une zone optimale de travail, de manipulation et de préhension pour un opérateur dans laquelle l'efficacité, le confort et la rapidité des mouvements sont optimisés et dans laquelle les pièces, parties ou composants à prendre par un opérateur devraient être transporté(e)s.

Dans le cadre de cette recherche d'optimisation des flux, il ne faut bien-sûr pas non plus négliger la simplicité, l'encombrement et le coût de revient, de l'équipement destiné à réaliser le transfert ou le transport dans le cadre du ou des flux. De plus, une possibilité d'adaptation pourra être souhaitée pour cet équipement pour pouvoir s'adapter à des changements de nature et/ou de nombre des pièces à transporter, de modification des tracés, de différences de cadences, entre le point de départ et le point d'arrivée du flux (régulation par zone tampon).

Actuellement, les deux principales solutions technologiques proposées pour la mise en oeuvre de flux de transfert automatisés dans le contexte précité sont, d'une part, les véhicules de transport autonomes générant un flux séquentiel (généralement par paquets) et, d'autre part, les équipements fixes à bandes transporteuses ou rails de circulation, souvent situés en hauteur et s'étendant par-dessus les machines et les outils de production.

Ainsi, les documents US 5 023 790, US 4 941 407, US 6 799 521, US 8 425 173 et PJ 5 557 511 montrent à titre d'exemples des solutions connues mettant en oeuvre des véhicules de transport autonomes sous la forme d'un AGV (« Automatic Guided Véhicle » - véhicule automatique à guidage). Ce type de véhicule peut soit directement transporter les pièces au niveau du poste de travail et demeurer sur place le temps de son déchargement par prélèvement, soit déposer un support de stockage de pièces (du type « rack » ou palette) à proximité du poste de travail et repartir immédiatement après son dépôt. Dans les deux cas, compte-tenu de l'encombrement du véhicule et/ou du support, les pièces à prendre par l'opérateur sont rarement toutes situées dans la zone optimale précitée et l'extraction de pièces d'un support nécessite souvent des mouvements complexes. Ces véhicules peuvent aussi se présenter sous forme de petits trains, dont les wagons sont des chariots supportant les pièces.

Les documents US 4947758, US 6241082, US 6749497, EP 0515910 et WO 2012/128705 divulguent quant à eux des solutions mettant en oeuvre des équipements fixes à rails transporteurs dans lesquels les produits sont suspendus individuellement ou en groupe à des supports mobiles sous forme de chariots ou des patins convoyeurs munis de crochets, pinces ou analogues.

Des variantes de réalisation mettant en oeuvre des bandes transporteuses sont également connues.

Ce second type de solution comporte généralement des moyens d'entraînement communs à tous les supports mobiles et déplaçant ces derniers de manière synchrone. Un approvisionnement des postes de travail au plus près des opérateurs est possible.

Néanmoins, les investissements pour ce genre d'équipement, compte-tenu des infrastructures fixes nécessaires, sont très importants. De plus, ils sont très peu flexibles et la création d'une zone tampon est délicate.

La présente invention a pour but de surmonter au moins les principales limitations des systèmes existants.

A cet effet, elle a pour objet un système automatisé de transfert de pièces, en particulier de parties de véhicules automobiles, présentant une forme générale allongée définissant une direction longitudinale, ce système comprenant au moins une unité de transport autonome, au moins une station de chargement en pièces de la ou des unités de transport autonome(s) et au moins une station de déchargement de la ou des unité(s) de transport autonome(s) et d'alimentation d'au moins un poste de travail ou de prélèvement, ladite ou chaque unité de transport autonome étant apte et destinée à transporter plusieurs pièces de la station de chargement vers la station de déchargement et d'alimentation,
système caractérisé en ce que la ou chaque unité de transport autonome consiste en un véhicule à guidage automatique, en ce qu'il comprend des modules de stockage temporaire de pièces dans lesquels ces dernières sont disposées à plusieurs, durant leur transfert entre les deux types de stations, ce avec un maintien selon une orientation sensiblement verticale de leur direction longitudinale, en ce que chaque module constitue une boîte de transport présentant une forme et un encombrement déterminés et comportant au moins une ouverture latérale vers l'extérieur autorisant le passage d'une pièce et pouvant être embarqué seul ou à plusieurs sur une unité de transport autonome, et en ce que ledit système comprend, en outre, au niveau de la station de déchargement et d'alimentation concernée, des moyens mobiles ou fixes d'acheminement final et individuel, vers le poste concerné, de chacun des modules chargés en pièces et livrés par les unités de transport autonomes, positionnées à un emplacement indexé associé à ladite station, et d'acheminement en retour des modules vides depuis ledit poste vers lesdites unités.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
Les figures 1A et 1B sont des représentations schématiques partielles d'un système de transfert automatisé de pièces selon un premier mode de réalisation de l'invention, la figure 1A illustrant la partie du système mis en oeuvre au niveau d'une station de chargement de pièces et la figure 1B illustrant la partie du système mis en oeuvre au niveau d'une station de déchargement des pièces et d'alimentation d'un poste de travail ou de prélèvement ;
La figure 1C est une représentation schématique globale d'un système de transfert selon l'invention, intégrant les deux parties représentées sur les figures 1A et 1B ;
La figure 2 est une représentation schématique en perspective illustrant une station de déchargement et d'alimentation en relation avec un second mode de réalisation d'un système selon l'invention ;
Les figures 3A et 3B sont des vues en perspective selon deux angles différents d'un module de stockage temporaire faisant partie du système tel que représenté figures 1A et 1B ;
La figure 4A est une vue en perspective d'un module de stockage temporaire faisant partie du système représenté figure 2 et la figure 4B illustre une variante de ce module ;
Les figures 5A et 5B illustrent schématiquement deux variantes de réalisation d'une unité de transport autonome chargée pouvant être mise en oeuvre dans le système représenté figure 2 ou dans celui représenté dans les figures 1 ;
La figure 6 est une vue simplifiée de dessus illustrant les mouvements d'une unité de transport autonome affectée à une station de déchargement et d'alimentation dans le cadre du système illustré figure 2, et,

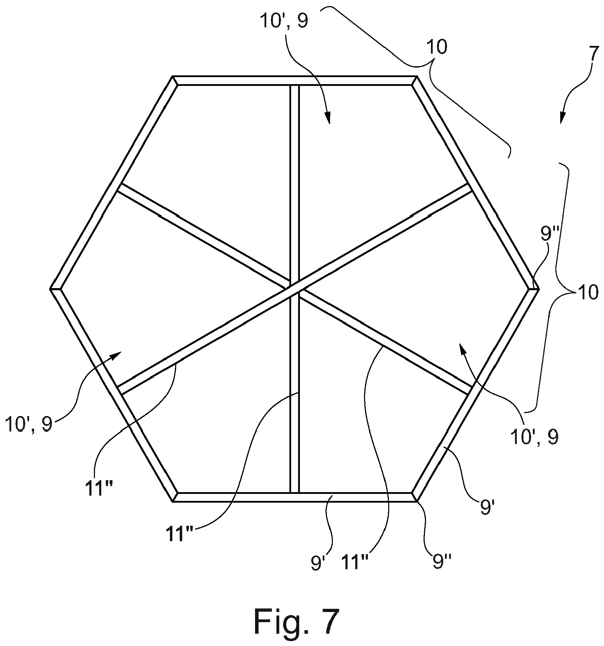

La figure 7 est une vue schématique de dessus d'un troisième mode de réalisation d'une module de stockage temporaire.

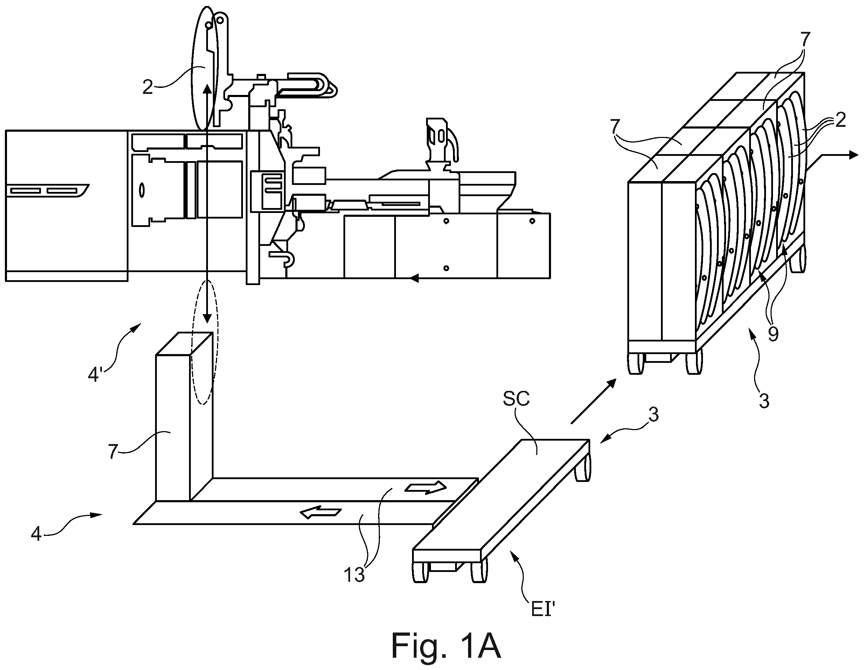

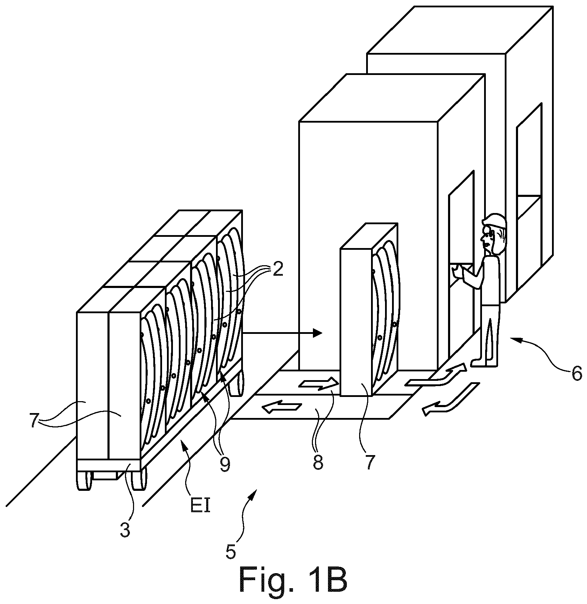

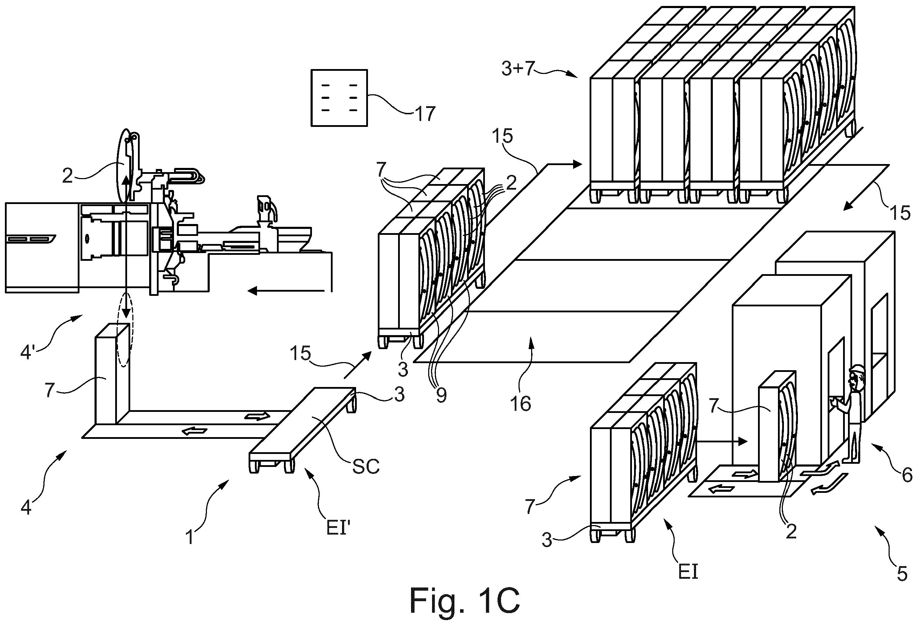

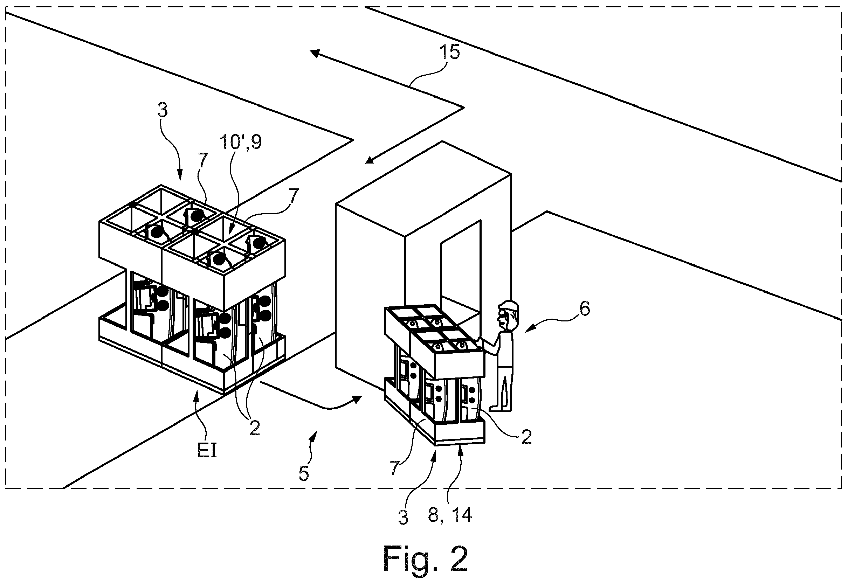

Les figures 1 et 2 illustrent chacune, en totalité ou en partie, un système automatisé de transfert de pièces 2, en particulier de parties de véhicules automobiles, présentant une forme générale allongée définissant une direction longitudinale DL. Ce système 1 comprend au moins une unité 3 de transport autonome, au moins une station 4 de chargement en pièces 2 de la ou des unités de transport autonome(s) 3 et au moins une station 5 de déchargement de la ou des unité(s) de transport autonome(s) 3 et d'alimentation d'au moins un poste de travail ou de prélèvement 6, ladite ou chaque unité de transport autonome 3 étant apte et destinée à transporter plusieurs pièces 2 de la station de chargement 4 vers la station 5 de déchargement et d'alimentation.

Conformément à l'invention, la ou chaque unité de transport autonome 3 consiste en un véhicule à guidage automatique, et le système 1 comprend des modules 7 de stockage temporaire de pièces 2 dans lesquels ces dernières sont disposées à plusieurs, durant leur transfert entre les deux types de stations 4 et 5, ce avec un maintien selon une orientation sensiblement verticale de leur direction longitudinale DL. Chaque module constitue une boîte de transport présentant une forme et un encombrement déterminés et comportant au moins une ouverture latérale 10 vers l'extérieur autorisant le passage d'une pièce 2 et pouvant être embarqué seul ou à plusieurs sur une unité de transport autonome 3. De plus, ledit système 1 comprend, en outre, au niveau de la station 5 de déchargement et d'alimentation concernée, des moyens 8 mobiles ou fixes d'acheminement final et individuel, vers le poste 6 concerné, de chacun des modules 7 chargés en pièces 2 et livrés par les unités de transport autonomes 3, positionnées à un emplacement indexé EI associé à ladite station 5, et d'acheminement en retour des modules 7 vides depuis ledit poste 6 vers lesdites unités 3.

Grâce à l'invention, on aboutit ainsi à un système de transfert hybride présentant les avantages des deux technologies mentionnées en introduction, mais en s'affranchissant de leurs inconvénients et limitations.

La mise en oeuvre d'unités de transport 3, circulant entre les stations de chargement 4 et de déchargement 5, permet de disposer d'une grande flexibilité, en terme de tracé et de possibilités de régulation et d'adaptation à des variations ou des différences de cadences (création de zones de stockage intermédiaires) et de s'affranchir d'infrastructure et d'équipements fixes lourds et encombrants.

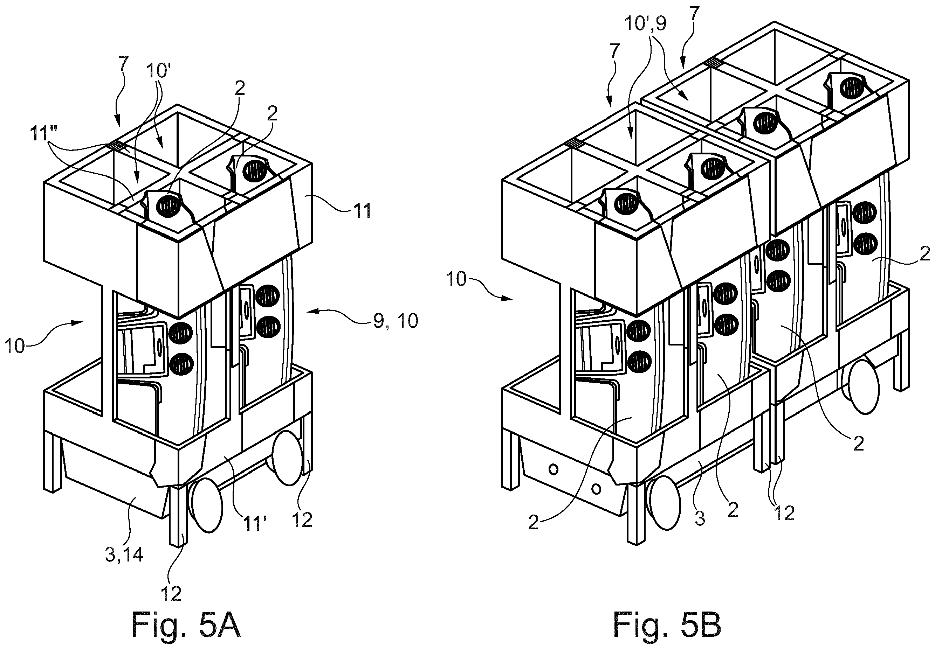

Bien entendu, chaque contenant 7 peut être transporté individuellement par une unité 3 entre les stations 4 et 5. Néanmoins, dans un contexte d'optimisation du flux et d'efficacité élevée du transfert entre les stations 4 et 5, les contenants 7 sont préférentiellement déplacés en groupe par les unités de transport autonomes 3, par exemple au moins par deux (figures 2 et 5B), sous forme d'alignement linéaire ou sous forme de grappe (par exemple double alignement - figures 1A, 1B et 1C).

Lorsqu'ils sont traités au niveau de la station de déchargement 5, ces groupes ou grappes de contenants 7 sont alors dégroupés et chaque contenant 7 est acheminé individuellement vers le poste de travail ou de prélèvement 6 concerné.

Ces groupes ou grappes peuvent être ensuite reformé(e)s après vidage des contenants et, le cas échéant, être transporté(e)s en retour par la même unité 3 vers la station de chargement 4.

Lorsqu'ils forment des groupes ou des grappes, les contenants 7 concernés sont avantageusement solidarisés entre eux pour former un ensemble structurel, par liaisonnement entre contenants 7 immédiatement adjacents ou voisins, par exemple par accrochage (système de crochet/anse).

Ainsi, les unités 3 transportent avantageusement plusieurs modules 7 dont chacun contient un nombre limité de pièces 2 (par exemple quatre), et chaque unité 3 transporte une pluralité de pièces 2 entre les stations 4 et 5, ce qui rend le système 1 efficace et performant. En outre, les modules ou contenants 7 et les pièces 2 étant déplacés en position dressée, sensiblement verticalement, leur encombrement individuel dans le plan horizontal et minimal ce qui facilite également un acheminement sans encombre.

Par la mise en oeuvre des modules 7, le chargement de chaque véhicule 3, qui peut comprendre un nombre important de pièces 2, est ainsi fractionné et de ce fait divisé en portions de chargement aisément manipulables (notamment par des systèmes mécanisés/automatisés). Les pièces 2 sont protégées (durant les manipulations et le transport - pièces préférentiellement suspendues et calées dans les modules 7) et peuvent être déplacées de manière partiellement groupée (groupement élémentaire de pièces 2 dans chaque module 7 - manipulation plus efficiente).

L'acheminement individuel de chaque module 7 vers le poste 6 destinataire, en tant que fraction d'un chargement d'une unité 3, permet d'amener ledit module 7, d'encombrement réduit, au plus près de l'opérateur présent au niveau de ce poste 2, en particulier dans sa zone optimale de travail.

Le chargement des modules 7 au niveau de la station 4 concernée peut s'effectuer de différentes manières, notamment par remplissage direct de l'ensemble des modules 7 présents sur une unité 3.

Toutefois, en accord avec une caractéristique avantageuse de l'invention, et comme le montre la figure 1A, le système comprend également, au niveau de la station de chargement 4 concernée, des moyens 13 mobiles ou fixes d'acheminement des modules de stockage 7 vides d'une unité de transport autonome 3, positionnée à un emplacement indexé El' associé à ladite station 4, vers un poste ou un site de chargement 4', et d'acheminement de modules de stockage 7 chargés en pièces 2 dudit poste ou site 4' vers une unité de transport autonome 3, éventuellement la même unité 3.

Selon une première variante, illustrée sur la figure 2, les moyens d'acheminement 8 associés à la station de déchargement 5 et/ou les moyens d'acheminement 13 associés à la station de chargement 4 consistent en des unités de transport autonomes 14 aptes et destinées à transporter chacune un unique module de stockage 7.

Les modules 7 peuvent, le cas échéant, également circuler sur un rail installé au sol ou éventuellement circuler sur un rail en hauteur, en état accrochés à un chariot ou analogue (variantes non représentées).

Les modules 7 sont conçus et configurés pour être aisément déplacés et manipulés par des dispositifs automatisés, et sont allongés et profilés dans la direction DL des pièces 2 qu'ils reçoivent.

Avantageusement, chaque boîte de transport 7 présente une forme générale parallélépipédique, ou éventuellement prismatique, avec une section polygonale, notamment rectangulaire ou carrée, et destiné à être mis en oeuvre en position dressée. De plus, chaque boîte de transport 7 présente une surface d'appui SA au sol ou de base correspondant sensiblement à la surface de chargement SC d'une unité de transport autonome 3 ou préférentiellement à une fraction entière de cette dernière (1/2, 1/3, 1/4, etc), les boîtes 7 pouvant être transportées en un ou plusieurs alignements sur une unité 3.

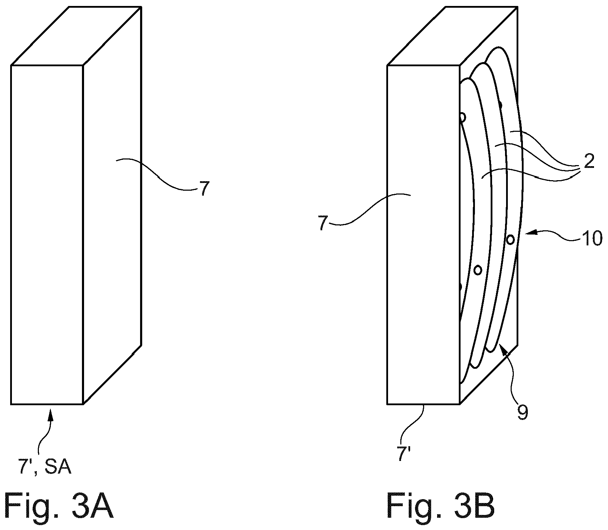

Selon une première variante ressortant des figures 1 et 3, chaque boîte de transport 7 parallélépipédique rectangle comporte une ouverture latérale 10, correspondant sensiblement à l'une des deux grandes faces latérales dudit parallélépipède, les pièces 2 étant arrangées dans ladite boîte 7 selon un alignement parallèle à ladite ouverture 10, en étant éventuellement suspendues dans cette boîte 7.

Selon une seconde variante ressortant des figures 2, 4 et 6, chaque boîte de transport 7 parallélépipédique, à section polygonale avec un nombre pair de côtés, est subdivisée en plusieurs compartiments 9 destinés chacun à loger une pièce 2, préférentiellement avec maintien latéral et calage, chaque compartiment individuel 9 étant avantageusement délimité extérieurement par deux portions adjacentes de deux parois latérales 9' reliées par une arête 9" et chaque compartiment 9 présentant préférentiellement, d'une part, une ouverture latérale 10 vers l'extérieur, s'étendant dans les deux portions de parois latérales 9' et autorisant le passage d'une pièce 2 et, d'autre part, une ouverture supérieure 10' autorisant également le passage d'une pièce 2.

Dans une forme de réalisation préférée de la seconde variante, les portions de parois latérales externes 9' des compartiments 9 de chaque boîte de transport 7 forment un bandeau circonférentiel supérieur 11 et un bandeau circonférentiel inférieur 11', ces deux bandeaux étant reliés par des parois internes 11" de compartimentage et chaque compartiment 9 étant avantageusement totalement ouvert en partie supérieure.

Le cas échéant, seul un bandeau supérieur ou inférieur peut être présent, ainsi qu'éventuellement un bandeau intermédiaire. Les compartiments 9 ou les éventuelles structures de maintien des pièces 2 dans ces compartiments peuvent être recouvert(e)s d'une matière de protection, préférentiellement élastique et/ou à propriété anti-glissement, pour ne pas abîmer la surface de la pièce 2 et/ou même la tenir.

Afin de caler le positionnement et l'ablocage des modules 7 sur les unités 3, le ou chaque module de stockage 7 est pourvu, au niveau de sa base 7', de moyens de sécurisation de son installation sur une unité de transport autonome 3, par exemple par coopération ou engagement mécanique amovible. Des moyens de liaisonnement temporaire entre boîtes ou modules 7 peuvent ainsi être prévus, tel que par exemple un dispositif latéral crochet/anse, aboutissant à la formation de blocs de contenants mutuellement solidaires et reposant de manière stable sur les unités 3 (un bloc par unité).

Selon une caractéristique de l'invention, le ou chaque module de stockage 7 peut comporter des pieds 12, éventuellement pourvus de roues 12', et chaque unité de transport autonome 3 être configurée pour venir se positionner sous la base 7' d'un module de stockage 7 à transférer et entre les pieds 12 de ce dernier.

Chaque unité de transport autonome 3 peut, par exemple, comporter une plateforme de chargement mobile en hauteur (avec une surface de chargement SC) permettant à ladite unité 3 de se glisser sous les bases 7' des modules 7 ou de se mettre à niveau avec les moyens d'acheminement 8 et 13, puis de soulever les modules 7 (décollement des pieds 12) pour les déplacer, le calage en position étant assuré par les pieds 12.

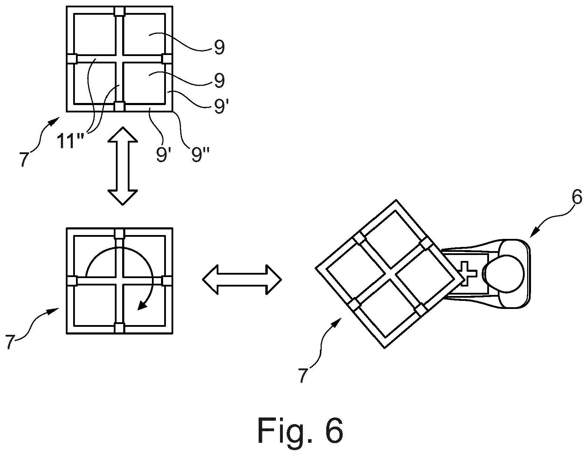

Les unités de transport autonomes 3 de petite taille, affectées à la station de déchargement 6 et aptes et destinées à transporter un unique contenant 7 (en pouvant le faire tourner sur lui-même pour présenter successivement chacun des différents compartiments 9 à l'opérateur - cf. figures 5A et 6) peuvent elles aussi embarquer un contenant 7 en se glissant sous ce dernier et le cas échéant entre ses pieds 12.

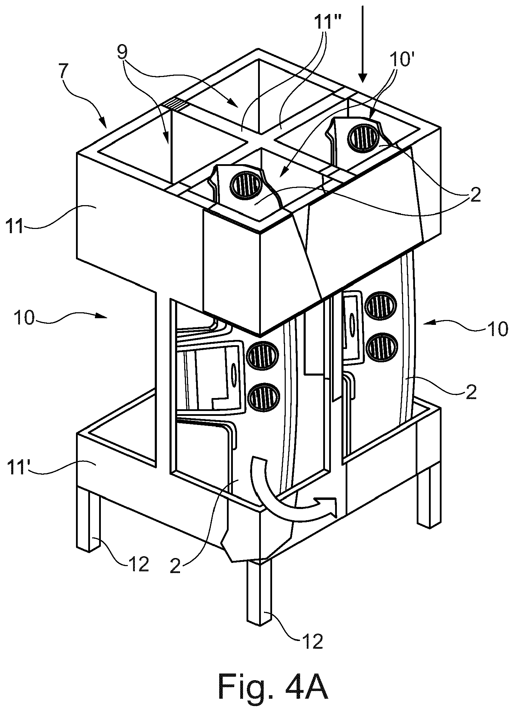

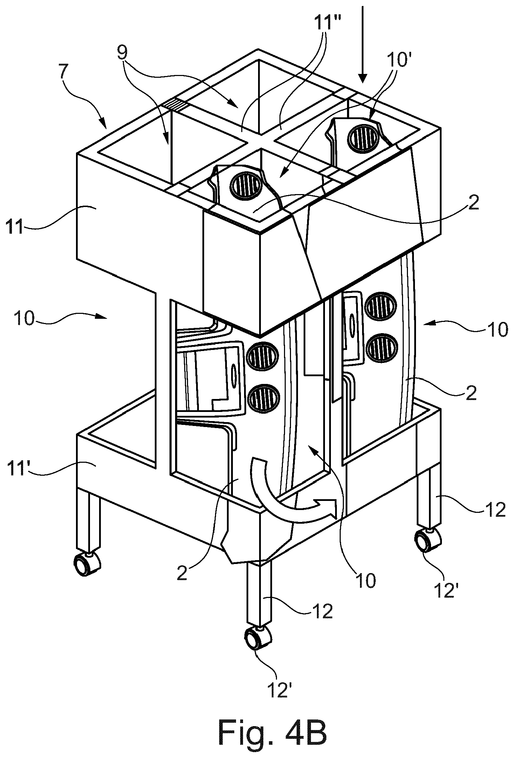

Comme le montre la figure 4B, ces pieds 12 peuvent être pourvus de roues pivotantes ou folles 12', décollées du sol lors du transport groupé des contenants 7 sur les unités 3 et autorisant leur déplacement au sol ou sur un circuit dédié au niveau des stations 4, 5 de déchargement et de chargement par entraînement automatisé ou par l'action d'un opérateur.

L'interfaçage entre les moyens d'acheminement 8, 13 et les unités 3, c'est-à-dire le transbordement des modules 7 (vides/chargés) des premiers vers les secondes et vice versa, peut s'effectuer par simple glissement forcé (poussé), par l'intermédiaire d'un portique ou bras robot, ou analogue.

Le système 1 peut bien entendu comprendre une ou plusieurs stations 4, 5 de chaque type, avec des transferts de modules 7 programmés entre elles selon les nécessités de la production, du conditionnement, de l'intégration, de l'assemblage, du stockage ou analogue d'un ou de plusieurs types de pièces 2 allongées.

Préférentiellement, le système 1 comprend une pluralité d'unités de transport autonomes 3 programmées pour effectuer des déplacements aller-retour entre les deux stations 4 et 5 selon un trajet de circulation 15 prédéterminé, au moins une zone de stationnement temporaire 16 desdites unités 3 sur le trajet aller et/ou le trajet retour étant éventuellement prévue.

L'invention a également pour objet un procédé de transfert de pièces allongées 2 avec une direction longitudinale DL, entre un poste ou site de chargement 4' d'une station de chargement 4 et un poste de prélèvement ou de travail 6 d'une station de déchargement et d'alimentation 5, mettant en oeuvre un système 1 de transfert de pièces comprenant au moins une unité 3 de transport autonome, au moins une station 4 de chargement en pièces 2 de la ou des unités de transport autonome(s) 3 et au moins une station 5 de déchargement de la ou des unité(s) de transport autonome(s) 3 et d'alimentation d'au moins un poste de travail ou de prélèvement 6, ladite ou chaque unité de transport autonome 3 étant apte et destinée à transporter plusieurs pièces 2 de la station de chargement 4 vers la station 5 de déchargement et d'alimentation.

Ce procédé est caractérisé en ce qu'il consiste à charger les pièces 2 dans des modules 7 de stockage temporaire formant boîtes de transport, dans lesquels lesdites pièces 2 sont disposées à plusieurs avec un maintien selon une orientation sensiblement verticale de leur direction longitudinale DL, puis à installer chacune desdites boîtes 7 chargées, individuellement ou à plusieurs, sur au moins une unité de transport autonome 3 laquelle transporte cette ou ces boîte(s) chargée(s) jusqu'à la station de déchargement et d'alimentation 5, à acheminer une à une lesdites boîtes 7 chargées depuis l'unité de transport autonome 3 concernée, arrivée à un emplacement indexé associé à ladite station 5, jusqu'à un poste de travail ou de prélèvement 6 prenant en charge lesdites pièces 2 (éventuellement après un arrêt temporaire au niveau de la zone de parking 16) et, enfin, à acheminer les boîtes 7 vides vers ladite unité de transport autonome 3, laquelle les transporte vers la station de chargement 4 (éventuellement après un arrêt temporaire au niveau de la zone de parking 16) pour être acheminées vers le poste ou site de chargement 4' (au niveau d'un emplacement indexé), pour y être à nouveau chargées en pièces 2, les différentes étapes précitées étant effectuées de manière cyclique.

Préférentiellement, le procédé mettra en oeuvre un système automatisé de transfert tel que décrit précédemment, lequel est piloté par une unité de traitement et de commande 17.

Alors que l'invention a été décrite ci-dessus plus particulièrement en relation avec un transfert de pièces entre une station de chargement 4 et une station de déchargement 5, le système 1 peut aisément être mis en oeuvre avec une pluralité de stations de chargement 4 et/ou une pluralité de stations de déchargement 5.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Système (1) automatisé de transfert de pièces (2), en particulier de parties de véhicules automobiles, présentant une forme générale allongée définissant une direction longitudinale (DL), ce système (1) comprenant au moins une unité (3) de transport autonome, au moins une station (4) de chargement en pièces (2) de la ou des unités de transport autonome(s) (3) et au moins une station (5) de déchargement de la ou des unité(s) de transport autonome(s) (3) et d'alimentation d'au moins un poste de travail ou de prélèvement (6), ladite ou chaque unité de transport autonome (3) étant apte et destinée à transporter plusieurs pièces (2) de la station de chargement (4) vers la station (5) de déchargement et d'alimentation,
système (1) **caractérisé en ce que** la ou chaque unité de transport autonome (3) consiste en un véhicule à guidage automatique, **en ce qu'**il comprend des modules (7) de stockage temporaire de pièces (2) dans lesquels ces dernières sont disposées à plusieurs, durant leur transfert entre les deux types de stations (4 et 5), ce avec un maintien selon une orientation sensiblement verticale de leur direction longitudinale (DL), **en ce que** chaque module (7) constitue une boîte de transport présentant une forme et un encombrement déterminés et comportant au moins une ouverture latérale (10) vers l'extérieur autorisant le passage d'une pièce (2) et pouvant être embarqué seul ou à plusieurs sur une unité de transport autonome (3), et **en ce que** ledit système (1) comprend, en outre, au niveau de la station (5) de déchargement et d'alimentation concernée, des moyens (8) mobiles ou fixes d'acheminement final et individuel, vers le poste (6) concerné, de chacun des modules (7) chargés en pièces (2) et livrés par les unités de transport autonomes (3), positionnées à un emplacement indexé (El) associé à ladite station (5), et d'acheminement en retour des modules (7) vides depuis ledit poste (6) vers lesdites unités (3).

2. Système selon la revendication 1, **caractérisé en ce que** chaque boîte de transport (7) présente une forme générale parallélépipédique, avec une section polygonale, notamment rectangulaire ou carrée, et destiné à être mis en oeuvre en position dressée, chaque boîte de transport (7) présentant une surface d'appui (SA) au sol ou de base correspondant sensiblement à la surface de chargement (SC) d'une unité de transport autonome (3) ou à une fraction entière de cette dernière.

3. Système selon l'une quelconque des revendications 1 et 2, **caractérisé en ce que** chaque boîte de transport (7) parallélépipédique rectangle comporte une ouverture latérale (10), correspondant sensiblement à l'une des deux grandes faces latérales dudit parallélépipède, les pièces (2) étant arrangées dans ladite boîte (7) selon un alignement parallèle à ladite ouverture (10), en étant éventuellement suspendues dans cette boîte (7).

4. Système selon l'une quelconque des revendications 1 et 2, **caractérisé en ce que** chaque boîte de transport (7) parallélépipédique, à section polygonale avec un nombre pair de côtés, est subdivisée en plusieurs compartiments (9) destinés chacun à loger une pièce (2), préférentiellement avec maintien latéral et calage, chaque compartiment individuel (9) étant avantageusement délimité extérieurement par deux portions adjacentes de deux parois latérales (9') reliées par une arête (9") et chaque compartiment (9) présentant, d'une part, une ouverture latérale (10) vers l'extérieur, s'étendant dans les deux portions de parois latérales (9') et autorisant le passage d'une pièce (2) et, d'autre part, une ouverture supérieure (10') autorisant également le passage d'une pièce (2).

5. Système selon la revendication 4, **caractérisé en ce que** les portions de parois latérales externes (9') des compartiments (9) de chaque boîte de transport (7) forment un bandeau circonférentiel supérieur (11) et un bandeau circonférentiel inférieur (11'), ces deux bandeaux étant reliés par des parois internes (11") de compartimentage et chaque compartiment étant avantageusement totalement ouvert en partie supérieure.

6. Système selon l'une quelconque des revendications 1 à 5, **caractérisé en ce que** le ou chaque module de stockage (7) est pourvu, au niveau de sa base (7'), de moyens de sécurisation de son installation sur une unité de transport autonome (3), par exemple par coopération ou engagement mécanique amovible.

7. Système selon la revendication 6, **caractérisé en ce que** le ou chaque module de stockage (7) comporte des pieds (12), éventuellement pourvus de roues (12'), et **en ce que** chaque unité de transport autonome (3) est configurée pour venir se positionner sous la base (7') d'un module de stockage (7) à transférer et entre les pieds (12) de ce dernier.

8. Système selon l'une quelconque des revendications 1 à 7, **caractérisé en ce qu'**il comprend, au niveau de la station de chargement (4) concernée, des moyens (13) mobiles ou fixes d'acheminement des modules de stockage (7) vides d'une unité de transport autonome (3), positionnée à un emplacement indexé (EI') associé à ladite station (4), vers un poste ou un site de chargement (4'), et d'acheminement de modules de stockage (7) chargés en pièces (2) dudit poste ou site (4') vers une unité de transport autonome (3), éventuellement la même unité (3).

9. Système selon la revendication 1 et/ou la revendication 8, **caractérisé en ce que** les moyens d'acheminement (8) associés à la station de déchargement (5) et/ou les moyens d'acheminement (13) associés à la station de chargement (4) consistent en des bandes transporteuses.

10. Système selon la revendication 1 et/ou la revendication 8, **caractérisé en ce que** les moyens d'acheminement (8) associés à la station de déchargement (5) et/ou les moyens d'acheminement (13) associés à la station de chargement (4) consistent en des unités de transport autonomes (14) aptes et destinées à transporter chacune un unique module de stockage (7).

11. Système selon l'une quelconque des revendications 1 à 10, **caractérisé en ce que** qu'il comprend une pluralité d'unités de transport autonomes (3) programmées pour effectuer des déplacements aller-retour entre les deux stations (4 et 5) selon un trajet de circulation (15) prédéterminé, au moins une zone de stationnement temporaire (16) desdites unités (3) sur le trajet aller et/ou le trajet retour étant éventuellement prévue.

12. Procédé de transfert de pièces allongées (2) avec une direction longitudinale (DL), entre un poste ou site de chargement (4') d'une station de chargement (4) et un poste de prélèvement ou de travail (6) d'une station de déchargement et d'alimentation (5), mettant en oeuvre un système (1) de transfert de pièces comprenant au moins une unité (3) de transport autonome, au moins une station (4) de chargement en pièces (2) de la ou des unités de transport autonome(s) (3) et au moins une station (5) de déchargement de la ou des unité(s) de transport autonome(s) (3) et d'alimentation d'au moins un poste de travail ou de prélèvement (6), ladite ou chaque unité de transport autonome (3) étant apte et destinée à transporter plusieurs pièces (2) de la station de chargement (4) vers la station (5) de déchargement et d'alimentation,
procédé **caractérisé en ce qu'**il consiste à charger les pièces (2) dans des modules (7) de stockage temporaire formant boîtes de transport, dans lesquels lesdites pièces (2) sont disposées à plusieurs avec un maintien selon une orientation sensiblement verticale de leur direction longitudinale (DL), puis à installer chacune desdites boîtes (7) chargées, individuellement ou à plusieurs, sur au moins une unité de transport autonome (3) laquelle transporte cette ou ces boîte(s) chargée(s) jusqu'à la station de déchargement et d'alimentation (5), à acheminer une à une lesdites boîtes (7) chargées depuis l'unité de transport autonome (3) concernée, arrivée à un emplacement indexé associé à ladite station (5), jusqu'à un poste de travail ou de prélèvement (6) prenant en charge lesdites pièces (2) et, enfin, à acheminer les boîtes (7) vides vers ladite unité de transport autonome (3), laquelle les transporte vers la station de chargement (4) pour être acheminées vers le poste ou site de chargement (4'), pour y être à nouveau chargées en pièces (2), les différentes étapes précitées étant effectuées de manière cyclique.

13. Procédé selon la revendication 12, **caractérisé en ce qu'**il met en oeuvre un système (1) automatisé de transfert selon l'une quelconque des revendications 1 à 11, lequel est piloté par une unité de traitement et de commande (17).
